# EUROPEAN PATENT APPLICATION

(11) **EP 4 836 119 A1**
(43) Date of publication of application: **04.11.2026**
(21) Application number: 24912242.5
(22) Date of filing: 04.12.2024
(51) Int. Cl.: H01M 50/204, H01M 10/6555, H01M 10/658, H01M 50/249

(54) **FIRE SPREAD PREVENTION MATERIAL, BATTERY PACK, AND AUTOMOBILE**

(30) Priority: 26.12.2023 JP 2023219070
(71) Applicant: Denka Company Limited, Tokyo 103-8338 (JP)
(72) Inventor: UCHIDA, Hikaru, Tokyo 103-8338 (JP); ITO, Hiroki, Tokyo 103-8338 (JP)
(74) Representative: Müller-Boré & Partner Patentanwälte PartG mbB
(86) International application number: PCT/JP2024/042791
(87) International publication number: WO 2025/142352

(57) **Abstract**

[Problem] To provide a fire spread prevention material capable of sufficient fire spread prevention, a battery pack utilizing said fire spread prevention material, and an automobile comprising said battery pack.

[Solution] One aspect of the present invention provides such a fire spread prevention material. The fire spread prevention material comprises an inorganic-fiber base material which includes inorganic fibers, and sodium silicate which is held on the inorganic-fiber base material. Provided that the average temperature rise rate from 100°C to 200°C when the fire spread prevention material is heated is V [°C/sec], and the thickness of the fire spread prevention material after exceeding 200°C is Da [mm], V × Da is 20 or less.

## Description

### BACKGROUND

The present invention relates to a fire spread prevention material, a battery pack, and an automobile.

### RELATED ART

With the widespread adoption of electrification of automobiles, the development of automotive battery packs and the battery cells used therein has been actively pursued. Among such automotive battery packs, those employing lithium-ion battery (LiB) cells with particularly high energy densities pose a risk of abnormalities such as thermal runaway. Accordingly, development is underway for technologies to enhance the safety of battery cells.

For example, Patent Document 1 proposes a heat-absorbing sheet used for the purpose of avoiding a rapid temperature rise and thermal runaway state caused by an internal short circuit or the like in a lithium-ion battery. However, such heat-absorbing sheets do not necessarily exhibit sufficient fire spread prevention properties.

### PRIOR ART DOCUMENTS

### Patent document

[Patent Document 1] Japanese Unexamined Patent Application Publication No. 2010-53196

### SUMMARY

### Problems to be Solved by Invention

In view of the above circumstances, the present invention provides a fire spread prevention material having sufficient fire spread prevention properties, a battery pack using the fire spread prevention material, and an automobile equipped with the battery pack.

### Means for Solving Problems

According to one aspect of the present invention, a fire spread prevention material is provided. The fire spread prevention material includes an inorganic fiber substrate containing inorganic fibers, and sodium silicate supported on or in the inorganic fiber substrate. V × Da is 20 or less, where V [°C/s] is an average heating rate when heating the fire spread prevention material from 100°C to 200°C, and Da [mm] is a thickness of the fire spread prevention material after being heated to 200°C.

According to this aspect, sufficient fire spread prevention properties can be exhibited.

### BRIEF DESCRIPTION OF DRAWINGS

[FIG. 1] FIG. 1 is a schematic diagram illustrating the state of water molecules present in sodium silicate.
[FIG. 2] FIG. 2 is a cross-sectional view schematically illustrating an embodiment of a fire spread prevention material.
[FIG. 3] FIG. 3 is a cross-sectional view schematically illustrating an embodiment of the fire spread prevention material.
[FIG. 4] FIG. 4(a) is a plan view schematically illustrating an embodiment of the fire spread prevention material having an outer casing. FIG. 4(b) includes a side view schematically illustrating the embodiment of the fire spread prevention material having the outer casing, and an enlarged view illustrating a cross-section of an end portion thereof.

### DETAILED DESCRIPTION

Hereinafter, embodiments of the present disclosure will be described using the drawings. Various features described in the embodiments below can be combined with each other.

It should be noted that, in the present specification, the content of Y in X refers to the proportion (mass%) of Y based on the total mass of X, and the water content of sodium silicate refers to the proportion (mass%) of water based on the total mass of the sodium silicate.

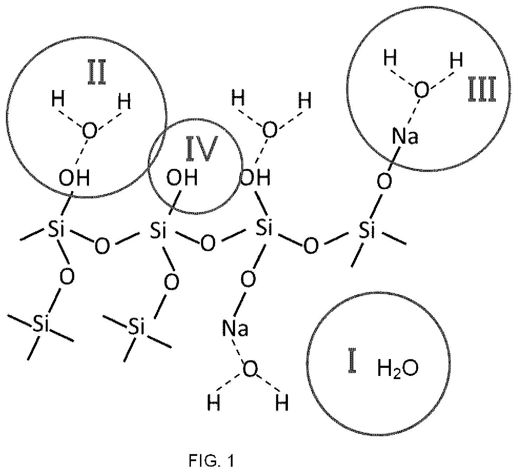

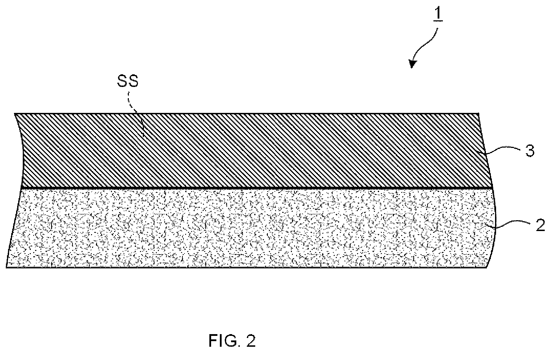

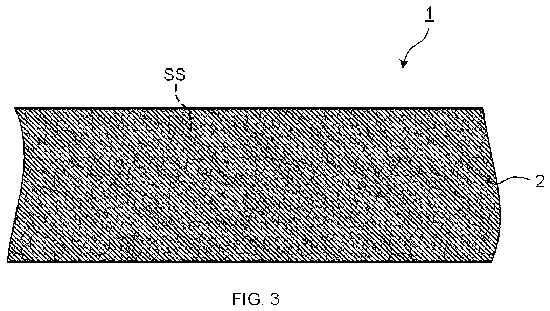

FIG. 1 is a schematic diagram illustrating the state of water molecules present in sodium silicate. FIG. 2 and FIG. 3 are cross-sectional views schematically illustrating respective embodiments of a fire spread prevention material.

The fire spread prevention material of the present invention is used by being disposed between two adjacent battery cells in a battery pack including two or more battery cells.

Here, the fire spread prevention material is required to have thermal insulation properties (fire spread prevention properties) that suppress heat transfer to adjacent battery cells in the event of an abnormality.

The fire spread prevention material of the present invention includes an inorganic fiber substrate containing inorganic fibers, and sodium silicate supported on or in the inorganic fiber substrate. Note that the sodium silicate is a compound represented by Na₂O·nSiO₂·mH₂O (where m represents O or a positive number).

Let V [°C/s] be an average heating rate when heating the fire spread prevention material from 100°C to 200°C, and Da [mm] be a thickness of the fire spread prevention material after being heated to 200°C (after the evaluation of the fire spread prevention properties described in Example). Then, V × Da is about 20 or less, preferably about 17 or less, more preferably about 14 or less, and still more preferably about 11 or less. When multiple fire spread prevention materials are laminated and used, Da represents the total thickness thereof.

The fire spread prevention material foams upon heating, thereby improving its thermal insulation properties. When the heating rate from 100°C to 200°C of the fire spread prevention material (foam) having a thickness Da of 6.7 mm after foaming was measured by the method described in Example, the average heating rate V was 3.3°C/s. Here, since the average heating rate is inversely proportional to the thickness, the inventors reached the conclusion that the value of the average heating rate × thickness (V × Da) appropriately reflects the fire spread prevention or delay effect required for the fire spread prevention material, and thus completed the present invention.

The value of V × Da of the above-mentioned foam is calculated to be 22.1. Therefore, it is important to design the fire spread prevention material such that V × Da falls below the above value (20 or less), and a fire spread prevention material designed in such a manner can suppress the temperature rise to be relatively gradual even after exceeding 100°C due to heating. Consequently, even if one battery cell ignites in the event of an abnormality, the spread of fire to adjacent battery cells can be prevented or delayed.

Note that the lower limit of V × Da is not particularly limited, but is, for example, about 5.

Additionally, the fire spread prevention properties of the fire spread prevention material can be evaluated by heating the material from one surface at 650°C for 120 seconds and measuring the surface temperature of the opposite surface of the fire spread prevention material (the surface temperature after 120 seconds).

The surface temperature of the opposite surface of the fire spread prevention material after 120 seconds is preferably about 150°C or lower, more preferably about 140°C or lower, and still more preferably about 120°C or lower. The lower limit of the surface temperature is, for example, about 25°C. A fire spread prevention material exhibiting a surface temperature within the above range can be determined to have excellent fire spread prevention properties.

Note that the surface temperature can be measured by the method described in Example.

Furthermore, during charging and discharging of the battery pack, the battery cells repeatedly expand and contract. Therefore, it is preferable that the fire spread prevention material have sufficient flexibility to follow such expansion and contraction of the battery cells. In this case, favorable flexibility can be imparted to the fire spread prevention material by combining an inorganic fiber substrate having sodium silicate supported thereon or therein with, for example, a sheet member made of polyurethane. This reduces the occurrence of mechanical load on the battery cells while following the expansion and contraction of the battery cells, thereby enabling the battery pack to operate (charge and discharge) stably and repeatedly.

Furthermore, the water content of the sodium silicate at 30°C is preferably about 60 mass% or less, more preferably about 40 mass% to about 60 mass% (inclusive), and still more preferably about 45 mass% to about 55 mass% (inclusive). Since such sodium silicate contains an appropriate amount of water, it can sufficiently moderate the temperature rise after the fire spread prevention material exceeds 100°C. Additionally, the fire spread prevention material can maintain high flexibility during production and storage of the fire spread prevention material and during production of the battery pack. As a result, the productivity of the fire spread prevention material and the battery pack can be enhanced.

The water content of the sodium silicate at 100°C is preferably about 15 mass% to about 35 mass% (inclusive), more preferably about 18 mass% to about 32 mass% (inclusive), and still more preferably about 21 mass% to about 29 mass% (inclusive). In this case, the sodium silicate retains sufficient water even at 100°C, and becomes porous by foaming when heated to 100°C or higher. As a result, in the event of an abnormality, the thermal insulation properties (thermal insulation effect) resulting from the latent heat of vaporization of the water and the formation of a porous structure are effectively exhibited. Therefore, even if one battery cell ignites in the event of an abnormality, the spread of fire to adjacent battery cells can be prevented or delayed. Note that the water content of the sodium silicate can be measured (determined) by the method described in Example.

The sodium silicate preferably has a rate of decrease in water content from 30°C to 100°C of about 0.75 mass%/°C or less, more preferably about 0.65 mass%/°C or less, and still more preferably about 0.55 mass%/°C or less
In this case, since the fire spread prevention material retains sufficient water in the temperature range of 30°C to 100°C (inclusive), it can contribute to improved productivity of the fire spread prevention material and the battery pack, as well as stable operation of the battery pack. Note that the rate of decrease in water content (mass%/°C) can be calculated by Equation 1 below: Equation 1: 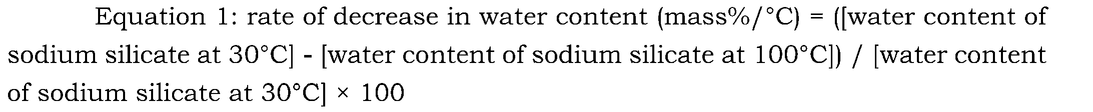 rate of decrease in water content (mass%/°C) = ([water content of sodium silicate at 30°C] - [water content of sodium silicate at 100°C]) / [water content of sodium silicate at 30°C] × 100

Here, as illustrated in FIG. 1, the states of water molecules present in the sodium silicate are classified into the following: I: free water; II: water molecules hydrogen-bonded to OH; III: water molecules adsorbed onto Na; and IV: water molecules present as OH. The order in which water molecules evaporate is considered to be I → II → III → IV (although these processes may proceed simultaneously).

Accordingly, because the sodium silicate retains the above-mentioned water molecules in the fire spread prevention material that has become porous in a high temperature range, the fire spread prevention material exhibits enhanced thermal insulation properties. Furthermore, from the viewpoint of increasing the water content in the higher temperature range, it is desirable to increase the proportion of Na₂O contained in the sodium silicate (i.e., to decrease the SiO₂/Na₂O molar ratio). Specifically, the SiO₂/Na₂O molar ratio is preferably about 3.3 or less, more preferably about 2.7 or less, still more preferably about 1 to 2.5 (inclusive), and particularly preferably about 1.2 to 2.3 (inclusive).

Moreover, water molecules adsorbed onto Na are considered to have strong binding force and to be less likely to desorb even at relatively high temperatures. Therefore, by increasing the proportion of Na₂O contained in the sodium silicate, it becomes easier to suppress a rapid temperature rise after the temperature of the fire spread prevention material exceeds 100°C. Accordingly, even if one battery cell ignites in the event of an abnormality, the spread of fire to adjacent battery cells can be more reliably prevented or delayed.

Additionally, by using such sodium silicate, the productivity of the fire spread prevention material and the battery pack can be further improved.

The proportion of the sodium silicate relative to the total of the sodium silicate and the inorganic fiber substrate is preferably about 60 mass% to about 98 mass% (inclusive), more preferably about 70 mass% to about 95 mass% (inclusive), and still more preferably about 75 mass% to about 90 mass% (inclusive). In this case, it becomes easier to impart superior fire spread prevention properties to the fire spread prevention material while also achieving weight reduction of the fire spread prevention material.

The proportion of the inorganic fiber substrate relative to the total of the sodium silicate and the inorganic fiber substrate is preferably about 1 mass% to about 40 mass% (inclusive), more preferably about 1 mass% to about 35 mass% (inclusive), still more preferably about 5 mass% to about 35 mass% (inclusive), particularly preferably about 8 mass% to about 30 mass% (inclusive), and most preferably about 10 mass% to about 20 mass% (inclusive). In this case, it becomes easier to impart superior fire spread prevention properties to the fire spread prevention material.

The inorganic fiber substrate is a substrate (e.g., a sheet) primarily composed of inorganic fibers. In such an inorganic fiber substrate, multiple voids (pores) are formed between the inorganic fibers. That is, the inorganic fiber substrate has a porous structure. For example, by applying a relatively high-viscosity sodium silicate to one surface of the inorganic fiber substrate and then drying it, a layer containing sodium silicate localized on the one surface of the inorganic fiber substrate can be formed. Alternatively, for example, by preparing an aqueous solution of a relatively low-viscosity sodium silicate, impregnating the inorganic fiber substrate therewith, and then drying it, sodium silicate can be filled into the voids of the inorganic fiber substrate.

In the present specification, the inorganic fiber is a fibrous substance having a length of about 1 mm or more and about an aspect ratio (length/width) of about 100 or more. The length (fiber length) of the inorganic fiber is preferably about 3 mm to about 12 mm (inclusive). The width (fiber diameter) of the inorganic fiber is preferably about 3 µm to about 10 µm (inclusive). When the inorganic fibers constituting the inorganic fiber substrate have the above fiber length and fiber diameter, the inorganic fiber substrate tends to exhibit excellent shape formability before drying in the production process of the inorganic fiber substrate. From the same or similar viewpoint, the average fiber diameter of the inorganic fibers is preferably about 5 µm or more and about 10 µm. Here, the average fiber diameter is a value measured by microscopic observation using a scanning electron microscope (SEM), an optical microscope, or the like.

The inorganic fibers constituting the inorganic fiber substrate may be of one type or multiple types.

Examples of the constituent materials of the inorganic fibers forming the inorganic fiber substrate include silica (SiO₂), alumina (AL₂O₃), carbon, silicon carbide (SiC), and the like. Among these, the constituent material of the inorganic fibers preferably includes at least one selected from the group consisting of silica (SiO₂) and alumina (AL₂O₃). In this case, enhanced fire spread prevention properties can be imparted to the fire spread prevention material, and the inorganic fiber substrate tends to exhibit excellent shape formability before drying in the production process of the inorganic fiber substrate.

Examples of such inorganic fibers include glass fibers, silica fibers, alumina-silica fibers, alumina fibers, basalt fibers, rock wool, and the like. Among these, the inorganic fiber substrate preferably includes at least one of glass fibers, silica fibers, and alumina-silica fibers. In this case, the above effects can be further improved.

The content of inorganic fibers in the inorganic fiber substrate is preferably about 60 mass% to about 100 mass% (inclusive), more preferably about 70 mass% to about 98 mass% (inclusive), still more preferably about 80 mass% to about 95 mass% (inclusive), and particularly preferably about 85 mass% to about 93 mass% (inclusive). In this case, superior fire spread prevention properties can be imparted to the fire spread prevention material.

The inorganic fiber substrate may further contain an organic binder. The organic binder is, for example, an organic material that binds the inorganic fibers together; a single type may be used alone, or two or more types may be used in combination.

Examples of the organic binder include resins having a glass transition temperature of room temperature (e.g., 25°C) or lower, water-soluble resins, and the like. Specific examples of the organic binder include, for example, acrylic resins, polyvinyl alcohol resins (e.g., vinylon), epoxy resins, cellulose such as cellulose microfibrils, polyvinyl chloride resins, and the like.

Here, the acrylic resin is a polymer containing, as monomer units, at least one selected from the group consisting of acrylic acid and derivatives thereof (e.g., acrylic esters), and methacrylic acid and derivatives thereof (e.g., methacrylic esters). Furthermore, the cellulose microfibrils refer to microfibrillated cellulose fibers.

Among these, the organic binder preferably includes at least one selected from the group consisting of acrylic resins, polyvinyl alcohol resins, and epoxy resins. In this case, a fire spread prevention material having enhanced fire spread prevention properties tends to be obtained.

The content of the organic binder in the inorganic fiber substrate is preferably about 0 mass% to about 40 mass% (inclusive), more preferably about 2 mass% to about 30 mass% (inclusive), still more preferably about 5 mass% to about 20 mass% (inclusive), and particularly preferably about 7 mass% to about 15 mass% (inclusive). In this case, it becomes easier to obtain a fire spread prevention material having superior fire spread prevention properties.

The inorganic fiber substrate may further contain inorganic particles. Examples of the constituent materials of the inorganic particles include silica, aluminum hydroxide, zinc oxide, magnesium carbonate, aluminum silicate, and the like.

Examples of the particles containing silica include precipitated silica, fumed silica, colloidal silica, and the like. Note that precipitated silica consists of amorphous silica particles obtained by a precipitation method, which is a type of wet process, and has a porous structure.

The average particle size of the inorganic particles is preferably about 0.01 µm to about 100 µm (inclusive), more preferably about 0.1 µm to about 80 µm (inclusive), still more preferably about 0.5 µm to 80 µm (inclusive), and particularly preferably about 1 µm to about 50 µm (inclusive). Here, the average particle size of the inorganic particles is the value of the volume-based cumulative particle size D50 as measured by a laser diffraction particle size analyzer. Inorganic particles having such an average particle size exhibit good handling properties and can be more uniformly distributed in the inorganic fiber substrate.

The content of the inorganic particles in the inorganic fiber substrate is preferably about 20 mass% to about 50 mass% (inclusive), more preferably about 25 mass% to about 45 mass% (inclusive), and still more preferably about 30 mass% to about 40 mass% (inclusive). By containing the inorganic particles in such an amount, thermal insulation properties are enhanced, and a fire spread prevention material having superior fire spread prevention properties can be obtained. Furthermore, a lighter-weight inorganic fiber substrate (and thus a fire spread prevention material) having higher mechanical strength can also be obtained.

Note that, from the viewpoint of increasing the mechanical strength of the inorganic fiber substrate, it is preferable that the inorganic fiber substrate not contain precipitated silica, and more preferable that it not contain inorganic particles.

The inorganic fiber substrate may contain a flocculant such as a polyamidine-based polymer. The content of the flocculant in the inorganic fiber substrate is preferably about 0.1 mass% to about 5 mass% (inclusive), more preferably about 0.3 mass% to about 4 mass% (inclusive), and still more preferably about 0.5 mass% to about 3 mass% (inclusive).

The inorganic fiber substrate may contain sodium silicate (other than sodium silicate having a water content at 100°C of 15 mass% to about 35 mass% (inclusive)) or may not contain such sodium silicate.

When such sodium silicate is contained, the content of the sodium silicate in the inorganic fiber substrate is preferably about 10 mass% or less, more preferably about 5 mass% or less, and still more preferably about 3 mass% or less.

As the inorganic fiber substrate, it is preferable to use a substrate having excellent sodium silicate retention (supporting) capacity. The inorganic fiber substrate is preferably a nonwoven fabric, and more preferably a sheet formed by a wet-laying method (wet-laid sheet). The wet-laid sheet is preferable from the viewpoint of its particularly excellent sodium silicate retention capacity.

In the wet-laying method, a dispersion obtained by dispersing materials (inorganic fibers, organic binder, etc.) in water is formed into a sheet on a papermaking screen and then dried, thereby producing an inorganic fiber substrate (nonwoven fabric). According to this method, an inorganic fiber substrate (nonwoven fabric) having substantially uniformly dispersed voids can be easily obtained. Therefore, the wet-laid sheet tends to have substantially uniformly dispersed voids and excellent sodium silicate retention capacity.

The apparent density of the inorganic fiber substrate is preferably about 0.08 g/cm³ to about 0.2 g/cm³ (inclusive). The basis weight of the inorganic fiber substrate, for a thickness of 1 mm, is preferably about 100 g/m² or less and about 170 g/m² or less.

The thickness of the inorganic fiber substrate is preferably 0.2 mm to 3 mm (inclusive).

The sodium silicate may be unevenly distributed on one surface side of the inorganic fiber substrate, or may be impregnated into the inorganic fiber substrate. That is, a fire spread prevention material 1 may have a double-layer structure of an inorganic fiber substrate 2 and a layer 3 containing sodium silicate SS, as illustrated in FIG. 2, or it may have a single-layer structure where the inorganic fiber substrate 2 is impregnated with sodium silicate SS, as illustrated in FIG. 3.

The double-layer fire spread prevention material 1 can be formed, for example, by applying a relatively high-viscosity sodium silicate SS to one surface of the inorganic fiber substrate 2 and then drying it, thereby forming the layer 3 containing the sodium silicate SS localized on the one surface of the inorganic fiber substrate 2. For this application, a method such as gravure coating, slot-die coating, knife coating, blade coating, comma coating, reverse roll coating, an inkjet method, or the like is suitably used.

In contrast, the single-layer fire spread prevention material 1 can be produced, for example, by impregnating the inorganic fiber substrate 2 with a relatively low-viscosity sodium silicate SS, applying pressure if necessary, and then drying it, thereby filling the voids of the inorganic fiber substrate 2 with the sodium silicate SS.

Here, the viscosity of the sodium silicate SS at 20°C is preferably about 100 mPa·s or higher, more preferably about 500 mPa·s to about 10000 mPa·s (inclusive), still more preferably about 1000 mPa·s to about 8000 mPa·s (inclusive), and particularly preferably about 1500 mPa·s to about 5000 mPa·s (inclusive). By using the sodium silicate SS having such a viscosity, sagging of the sodium silicate SS from the inorganic fiber substrate 2 can be suppressed, thereby making it easier for the inorganic fiber substrate 2 to support the sodium silicate SS thereon or therein.

Note that the water content and viscosity of the sodium silicate SS may be adjusted by adding water thereto.

The above-described single- or double-layer fire spread prevention material 1 is suitably produced by a roll-to-roll process, in which the inorganic fiber substrate 2 wound in a roll is unwound, supplied with sodium silicate SS, dried, and then rewound into a roll. As described above, the fire spread prevention material 1 can maintain high flexibility even during production of the fire spread prevention material 1. Therefore, the fire spread prevention material 1 can be satisfactorily wound into a roll, and cracking or the like of the fire spread prevention material 1 is less likely to occur even after winding into a roll.

It is preferable that the layer 3 in the configuration example of FIG. 2, and the fire spread prevention material 1 (hereinafter referred to as the "sodium silicate-containing portion") in the configuration example of FIG. 3 exhibit endothermic behavior in a temperature range of 100°C to 300°C (inclusive). Furthermore, the mass loss rate when the sodium silicate-containing portion is heated from 100°C to 300°C at a rate of 10°C/min is preferably 15 mass% or more.

The endothermic behavior of the sodium silicate-containing portion is considered to arise from an endothermic reaction of water contained in the sodium silicate-containing portion (e.g., water molecules in the sodium silicate) within a temperature range of 100°C to 300°C (inclusive). On the other hand, the mass loss of the sodium silicate-containing portion is considered to result from this endothermic reaction.

Accordingly, the mass loss rate when the sodium silicate-containing portion is heated from 100°C to 300°C at 10°C/min correlates with the water content contained in the sodium silicate-containing portion and the amount of heat absorbed. Therefore, when the mass loss rate of the sodium silicate-containing portion is 15 mass% or more, the amount of heat absorbed in the above temperature range increases, and it is presumed that sufficient fire spread prevention properties can be achieved in the fire spread prevention material.

Note that the endothermic behavior of the sodium silicate-containing portion can be confirmed, for example, by thermogravimetric-differential thermal analysis (TG-DTA), based on the presence or absence of an endothermic peak within the temperature range of 100°C to 300°C (inclusive).

The mass loss rate when the sodium silicate-containing portion is heated from 100°C to 300°C at 10°C/min is preferably about 15 mass% to about 30 mass% (inclusive), more preferably about 17 mass% to about 28 mass% (inclusive), still more preferably about 20 mass% to about 25 mass% (inclusive), particularly preferably about 23 mass% to about 25 mass% (inclusive), and most preferably about 23.5 mass% to about 25 mass% (inclusive). In this case, it becomes easier to obtain a fire spread prevention material with superior fire spread prevention properties. Note that the above-mentioned mass loss rate can be calculated by Equation 2 below: Equation 2: 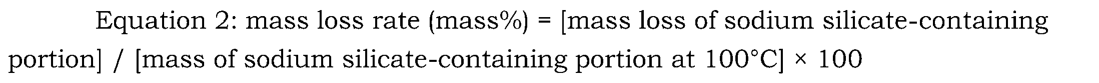 mass loss rate (mass%) = [mass loss of sodium silicate-containing portion] / [mass of sodium silicate-containing portion at 100°C] × 100

Here, the mass loss of the sodium silicate-containing portion is the difference between the mass of the sodium silicate-containing portion at 100°C and the mass of the sodium silicate-containing portion at 300°C. When multiple sodium silicate-containing portions are present, the mass loss rate of each sodium silicate-containing portion may fall within the above range, or the total of the mass loss rates of all the sodium silicate-containing portions may fall within the above range.

The fire spread prevention material preferably has insulating properties. In this case, for example, enhanced insulation properties can be imparted to the fire spread prevention material by protecting both sides of the inorganic fiber substrate having sodium silicate supported thereon or therein with resin sheet members, or by accommodating the inorganic fiber substrate having sodium silicate supported thereon or therein in an outer casing 5 described later. Here, having insulating properties means that the electrical resistivity measured by volume resistivity measurement is 10⁸ Ω·cm or more.

The fire spread prevention material may be in the form of a sheet (e.g., a flat plate), or may be processed into a predetermined shape. The predetermined shape may be appropriately set according to the shape of the installation location of the fire spread prevention material.

The predetermined shape may be, for example, a shape conforming to the shape of the installation location of the fire spread prevention material (such as the surface shape of a member disposed to face the fire spread prevention material). Specific examples of the shape include a sheet having surface irregularities, a sheet having a curved section with an angle of 90° or more, and the like. The shape of the irregularities (protrusions and recesses) is not particularly limited, and may be rectangular in cross-section, V-shaped in cross-section, U-shaped in cross-section, or the like.

By producing the fire spread prevention material processed into a predetermined shape by the producing method described later, the occurrence of separation between the inorganic fiber substrate and the sodium silicate as well as breakage thereof can be prevented. The absence of such separation and breakage in the fire spread prevention material can be confirmed, for example, by observing a cross-section of the fire spread prevention material using a scanning electron microscope (SEM).

The fire spread prevention material processed into a predetermined shape can retain its shape. The ability of the fire spread prevention material to retain a predetermined shape can be quantified by its three-point bending strength.

Specifically, the three-point bending strength of the fire spread prevention material measured according to JIS K 7171 is preferably about 0.5 MPa to about 5 MPa (inclusive), more preferably about 0.8 MPa to about 4 MPa (inclusive), and still more preferably about 1 MPa to about 3 MPa (inclusive). The fire spread prevention material having such three-point bending strength can be said to have sufficient strength to retain the predetermined shape.

The total thickness of the inorganic fiber substrate and the sodium silicate (in the configuration examples of FIG. 2 and FIG. 3, the thickness of a single fire spread prevention material 1) is preferably about 5 mm or less, more preferably about 0.5 mm to about 5 mm (inclusive), still more preferably about 1 mm to about 4 mm (inclusive), and further preferably about 1.5 mm to about 3 mm (inclusive). In this case, the fire spread prevention material with improved fire spread prevention performance can be obtained while suppressing an increase in the space required for arranging the fire spread prevention material within the battery pack.

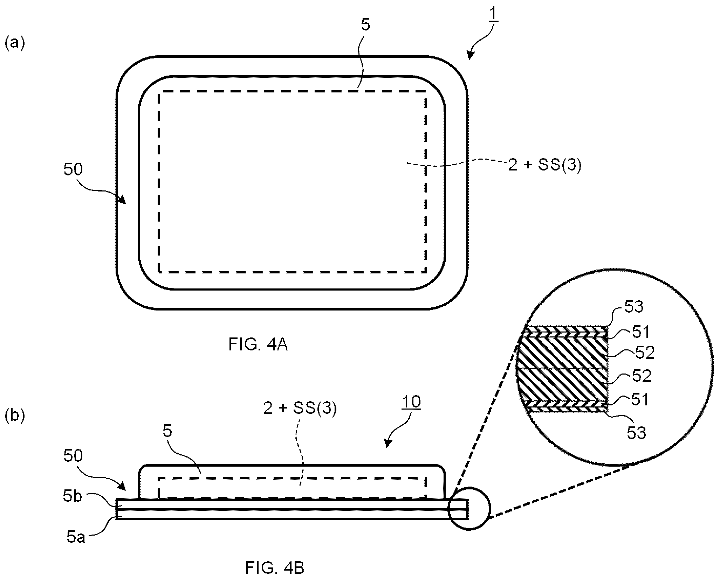

As illustrated in FIG. 4, the fire spread prevention material 1 may further include the outer casing 5, which accommodates the inorganic fiber substrate 2 and the sodium silicate SS. In other words, it can be said that the fire spread prevention material 1 includes a fire spread prevention material main body, which is the inorganic fiber substrate 2 having sodium silicate SS supported thereon or therein, and the outer casing 5 accommodating this fire spread prevention material main body. By accommodating the sodium silicate SS in the outer casing 5, the amount of water dissipating from the fire spread prevention material 1 can be adjusted (reduced).

FIG.4(a) is a plan view schematically illustrating an embodiment of the fire spread prevention material having an outer casing. FIG. 4(b) includes a side view schematically illustrating the embodiment of the fire spread prevention material having the outer casing, and an enlarged view illustrating a cross-section of an end portion thereof.

The water vapor transmission rate (WVTR) of the outer casing 5 at 40°C and 90% RH is preferably about 15 g/m²/day or less, more preferably about 10 g/m²/day or less, still more preferably about 5 g/m²/day or less, and particularly preferably about 1 g/m²/day or less. Note that the lower limit of the water vapor transmission rate of the outer casing at 40°C is about 0.01 g/m²/day. By setting the water vapor transmission rate of the outer casing 5 within the above range, the amount of water dissipating from the fire spread prevention material 1 can be more reliably adjusted (reduced), thereby further improving the fire spread prevention properties.

Note that the water vapor transmission rate (water vapor permeability) is measured according to the method specified in JIS K 7129-2:2019.

The outer casing 5 accommodates a composite of the inorganic fiber substrate 2 and the sodium silicate SS inside, by sealing the outer peripheries of two sheet members 5a and 5b with a sealing portion 50. The sealing portion 50 is formed by joining the outer peripheries of the two sheet members 5a and 5b using a method such as fusion bonding (ultrasonic fusion bonding, high-frequency fusion bonding, or thermal fusion bonding). Alternatively, a single sheet member may be folded in half, and its outer periphery may be sealed by a sealing portion to form a structure configured to accommodate the composite of the inorganic fiber substrate 2 and the sodium silicate SS.

In the present embodiment, each of the sheet members 5a and 5b is a laminate including a base layer 51, a sealing layer 52 provided on the inner surface side of the base layer 51, and a protective layer 53 provided on the outer surface side of the base layer 51.

The base layer 51 has functions such as imparting mechanical strength to the sheet members 5a and 5b and adjusting (blocking) the transmission of water (water vapor).

The base layer 51 may be formed of a metal foil. Examples of the constituent material of this metal foil include aluminum or aluminum alloys, nickel or nickel alloys, stainless steel, and the like.

The thickness of the base layer 51 is not particularly limited, but is preferably about 5 µm to about 100 µm (inclusive), more preferably about 8 µm to about 80 µm (inclusive), and still more preferably about 12 µm to about 60 µm (inclusive). In this case, it is possible to ensure appropriate water vapor transmission properties and sufficient flexibility of the sheet members 5a and 5b.

The sealing layer 52 has a function of sealing the outer casing 5 by fusion bonding.

Examples of the constituent material (fusible material) of the sealing layer 52 include polyethylene (LDPE, LLPDE), polypropylene, ethylene-vinyl acetate copolymer, polyethylene terephthalate, polybutylene terephthalate, polyvinyl chloride, polyvinylidene chloride, ethylene-vinyl alcohol copolymer, polystyrene, polyacrylonitrile, ethylene-(meth)acrylic acid copolymer, polymethylpentene, and the like. Polypropylene is more preferred as the constituent material of the sealing layer 52, and unoriented polypropylene is still more preferred.

The thickness of the sealing layer 52 is not particularly limited, but is preferably about 5 µm to about 200 µm (inclusive), more preferably about 10 µm to about 100 µm (inclusive), still more preferably about 20 µm to about 120 µm (inclusive), and particularly preferably about 30 µm to about 80 µm (inclusive). This makes it possible to improve sealing properties while ensuring the flexibility of each of the sheet members 5a and 5b.

The protective layer 53 has a function of protecting the base layer 51 (e.g., preventing corrosion of the base layer 51).

A relatively rigid resin material is used as the constituent material of the protective layer 53. Examples of such rigid resin materials include polyamide resins (nylon), acrylic resins, polyimide resins, polyetherimide resins, polysulfone resins, polyethersulfone resins, polyether ether ketone resins, polycarbonate resins, polyvinyl butyral resins, polyarylate resins, fluororesins, polyester resins, and the like.

The thickness of the protective layer 53 is not particularly limited, but is preferably about 5 µm to about 100 µm (inclusive), more preferably about 10 µm to about 50 µm (inclusive), and still more preferably about 15 µm to about 30 µm (inclusive).

The thickness of the outer casing is not particularly limited, but is preferably about 250 µm or less, more preferably about 200 µm or less, and still more preferably about 100 µm or less. In this case, it becomes easier to set the water vapor transmission rate of the outer casing 5 within the above range. As a result, the amount of water dissipating from the fire spread prevention material 1 can be suitably adjusted (reduced), thereby further improving the fire spread prevention properties.

Note that the sheet members 5a and 5b are not limited to a three-layer structure; depending on the required characteristics, they may have a single-layer (one-layer) structure, a double-layer structure, or a structure of four or more layers.

Although the fire spread prevention material according to one embodiment has been described above, the fire spread prevention material of the present invention is not limited to the above embodiment.

In another embodiment of the present invention, there is provided a battery pack including two or more battery cells and the fire spread prevention material disposed between adjacent battery cells. This battery pack is, for example, a lithium-ion battery.

In yet another embodiment of the present invention, there is provided an automobile including an automobile body and the above-described battery pack mounted on the automobile body.

Furthermore, the invention may also be provided in the following aspects
(1) A fire spread prevention material comprising: an inorganic fiber substrate containing inorganic fibers; and sodium silicate supported on or in the inorganic fiber substrate, wherein V × Da is 20 or less, where V [°C/s] is an average heating rate when heating the fire spread prevention material from 100°C to 200°C, and Da [mm] is a thickness of the fire spread prevention material after being heated to 200°C.
(2) The fire spread prevention material according to (1), wherein: the sodium silicate has a water content at 30°C of 60 mass% or less.
(3) The fire spread prevention material according to (1) or (2), wherein: the sodium silicate has a SiO₂/Na₂O molar ratio of 3.3 or less.
(4) The fire spread prevention material according to any one of (1) to (3), wherein: the sodium silicate has a viscosity at 20°C of 100 mPa·s or higher.
(5) The fire spread prevention material according to any one of (1) to (4), wherein: a constituent material of the inorganic fibers comprises at least one selected from the group consisting of silica (SiO₂) and alumina (Al₂O₃).
(6) The fire spread prevention material according to any one of (1) to (5), wherein: the inorganic fiber substrate is a wet-laid sheet.
(7) The fire spread prevention material according to any one of (1) to (6), wherein: the sodium silicate is localized on one surface side of the inorganic fiber substrate, or is impregnated into the inorganic fiber substrate.
(8) The fire spread prevention material according to any one of (1) to (7), wherein: a total thickness of the inorganic fiber substrate and the sodium silicate is 5 mm or less.
(9) The fire spread prevention material according to any one of (1) to (8), further comprising: an outer casing that accommodates the inorganic fiber substrate and the sodium silicate.
(10) The fire spread prevention material according to (9), wherein: the outer casing has a water vapor transmission rate (WVTR) at 40°C and 90% RH of 15 g/m²/day or less, and has a thickness of 250 µm or less.
(11) The fire spread prevention material according to any one of (1) to (10), wherein: the fire spread prevention material is used by being disposed between two adjacent battery cells in a battery pack including two or more battery cells.
(12) A battery pack comprising: two or more battery cells; and the fire spread prevention material according to any one of (1) to (11), disposed between two adjacent battery cells.
(13) An automobile comprising: an automobile body; and the battery pack according to (12), mounted on the automobile body.

Needless to say, the present invention is not limited to the above.

Finally, although various embodiments according to the present disclosure have been described, they are presented by way of example and are not intended to limit the scope of the invention. The novel embodiments may be implemented in various other forms, and various omissions, substitutions, and changes may be made without departing from the spirit of the invention. These embodiments and their modifications are intended to be included within the scope and spirit of the invention, as well as within the scope of the invention described in the claims and their equivalents.

### [Example]

The present invention will now be described in more detail using Example and Comparative Example below, but the present invention is not limited to Example below.

### 1. Preparation of Materials

### <Sodium Silicate>

SS1: SiO₂/Na₂O molar ratio = 2.1 (water content at 30°C: 53.9 mass%, viscosity at 20°C: 1130 mPa·s)
SS2: SiO₂/Na₂O molar ratio = 2.1 (water content at 30°C: 50.8 mass%, viscosity at 20°C: 4250 mPa·s)
SS3: SiO₂/Na₂O molar ratio = 3.0 (water content at 30°C: 61.5 mass%, viscosity at 20°C: 175 mPa·s)

### <Inorganic Fiber>

F1: Glass fiber (average fiber diameter 10 µm)

### <Organic Binder>

B1: Vinylon fiber (average fiber diameter 5 µm)

### 2. Preparation of Inorganic Fiber Substrate (Wet-Laid Sheet)

6.5 parts by mass of the inorganic fiber F1 and 0.7 parts by mass of the organic binder B1 were added to 100 parts by mass of pure water, and the mixture was mixed for 2 hours using a homomixer manufactured by Tokushu Kikai Kogyo Co., Ltd. to obtain a dispersion. The dispersion was formed into a sheet on a papermaking screen and dried with a Yankee dryer to produce a wet-laid sheet (nonwoven fabric).

Note that the wet-laid sheet had a thickness of 0.6 mm and a basis weight of 120 g/m².

### 3. Production of Fire Spread Prevention Material

### (Sample No. 1)

The sodium silicate SS1 was impregnated into the wet-laid sheet (inorganic fiber substrate), compressed using a roller, and then dried at 100°C. Accordingly, a single-layer fire spread prevention material was produced, in which the voids of the wet-laid sheet were filled with the sodium silicate SS1.

### (Sample No. 2)

A single-layer fire spread prevention material was produced in the same manner as Sample No. 1, except that the sodium silicate SS1 was replaced with the sodium silicate SS2.

### (Sample No. 3)

A single-layer fire spread prevention material was produced in the same manner as Sample No. 1, except that the sodium silicate SS1 was replaced with the sodium silicate SS3.

### (Sample No. 4)

The fire spread prevention material obtained in Sample No. 1 was heat-treated using the method described below in "4-3. Evaluation of Fire Spread Prevention Properties", and the resulting fire spread prevention material (foamed fire spread prevention material) was used as a fire spread prevention material of Sample No. 4.

### 4. Measurement and Evaluation

### 4-1. Measurement of Water Content

For each of the sodium silicates SS1 to SS3, the mass change up to 1000°C was measured using a thermogravimetric analyzer ("High-Sensitivity Simultaneous Thermal Analyzer STA 2500 Regulus" manufactured by NETZSCH Japan K.K.). The measured value at 1000°C was defined as the "solid content contained in each of the sodium silicates SS1 to SS3", and the water content at 30°C for each of the sodium silicates SS1 to SS3 was then calculated based on this solid content value and the thermogravimetric measurement values.

### 4-2. Confirmation of Endothermic Peak

First, a portion of the obtained fire spread prevention material was sampled and pulverized to obtain a measurement sample. Next, differential thermal analysis (DTA) measurement of the measurement sample was performed using a thermogravimetric-differential thermal analyzer (TG-DTA), and a differential thermal curve was obtained when the temperature was increased from room temperature to 300°C at a rate of 10°C/min.

From the obtained differential thermal curve, it was confirmed whether an endothermic peak was present in the temperature range from 100°C to 300°C.

### 4-3. Evaluation of Fire Spread Prevention Properties

On a hot plate ("PA8015" manufactured by MSA Factory Co., Ltd.) heated to 650°C, one or two sheets of the fire spread prevention material, one aluminum thin plate (thickness: 0.5 mm), a K-type thermocouple, two glass fiber sheets (thickness per sheet: 0.6 mm), and an aluminum block (500 g) were stacked in this order. Then, the temperature on the back side of the fire spread prevention material (the surface temperature on the side opposite to the hot plate) was measured, and the average heating rate from 100°C to 200°C was determined.

These results are indicated in Table 1 below.

### [Table 1]

**Table 1**

| Single-layer Structure | | Example 1 | Example 2 | Example 3 | Example 4 | Example 5 | Example 6 | Comparative Example 1 |
|---|---|---|---|---|---|---|---|---|
| Sample No. | | 1 | 2 | 3 | 1 | 2 | 3 | 4 |
| Inorganic fiber | Type | F1 | F1 | F1 | F1 | F1 | F1 | F1 |
| | Water content (mass%) | 20 | 20 | 20 | 20 | 20 | 20 | 20 |
| Organic binder | Type | B1 | B1 | B1 | E1 | B1 | B1 | B1 |
| Sodium silicate | Type | SS1 | SS2 | SS3 | SS1 | SS2 | SS3 | SS1 |
| | Water content at 30°C (mass%) | 53.9 | 50.8 | 61.5 | 53.9 | 50.8 | 61.5 | 0 |
| | Viscosity at 20°C (mPa·s) | 1130 | 4250 | 175 | 1130 | 4250 | 175 | - |
| | Content (mass%) | 80 | 80 | 80 | 80 | 80 | 80 | 80 |
| Endothermic property of sodium silicate-containing portion | | Present | Present | Present | Present | Present | Present | Absent |
| Number of sheets | | 2 | 2 | 2 | 1 | 1 | 1 | 2 |
| Total thickness (mm) | Before evaluation of fire spread prevention properties (Db) | 1,3 | 1.2 | 1.1 | 0.5 | 0.7 | 0.6 | - |
| | After evaluation of fire spread prevention properties (Da) | 7.8 | 6.5 | 4.5 | 3.7 | 3.7 | 2.7 | 6.7 |
| Fire spread prevention performance | Average temperature rise rate V(°C /s) × Da | 10.9 | 8.5 | 10.4 | 14.8 | 11.8 | 15.1 | 22.1 |

One or two sheets of the fire spread prevention material of each of Sample Nos. 1 to 4 were sandwiched between two poter sheets ('GX-P-F' manufactured by Toppan Printing Co., Ltd., thickness: 200 µm, water vapor transmission rate: 0.05 g/m²/day at 40°C and 90% RH), and the outer peripheries thereof were sealed to form an outer casing. According, results similar to those described above can be obtained.

Furthermore, similar results can also be obtained when silica fibers, alumina fibers, or alumina-silica fibers are used in place of the glass fibers.

### [Symbol Explanation]

1: Fire spread prevention material
2: Inorganic fiber substrate
3: Layer
5: Outer casing
5a: Sheet member
5b: Sheet member
50: Sealing portion
51: Base layer
52: Sealing Layer
53: Protective layer
SS: Sodium silicate

## Claims

1. A fire spread prevention material comprising:
an inorganic fiber substrate containing inorganic fibers; and
sodium silicate supported on or in the inorganic fiber substrate,
wherein V × Da is 20 or less, where V [°C/s] is an average heating rate when heating the fire spread prevention material from 100°C to 200°C, and Da [mm] is a thickness of the fire spread prevention material after being heated to 200°C.

2. The fire spread prevention material according to Claim 1, wherein:
the sodium silicate has a water content at 30°C of 60 mass% or less.

3. The fire spread prevention material according to Claim 1 or Claim 2, wherein:
the sodium silicate has a SiO₂/Na₂O molar ratio of 3.3 or less.

4. The fire spread prevention material according to any one of Claims 1 to 3, wherein:
the sodium silicate has a viscosity at 20°C of 100 mPa·s or higher.

5. The fire spread prevention material according to any one of Claims 1 to 4, wherein:
a constituent material of the inorganic fibers comprises at least one selected from the group consisting of silica (SiO₂) and alumina (Al₂O₃).

6. The fire spread prevention material according to any one of Claims 1 to 5, wherein:
the inorganic fiber substrate is a wet-laid sheet.

7. The fire spread prevention material according to any one of Claims 1 to 6, wherein:
the sodium silicate is localized on one surface side of the inorganic fiber substrate, or is impregnated into the inorganic fiber substrate.

8. The fire spread prevention material according to any one of Claims 1 to 7, wherein:
a total thickness of the inorganic fiber substrate and the sodium silicate is 5 mm or less.

9. The fire spread prevention material according to any one of Claims 1 to 8, further comprising:
an outer casing that accommodates the inorganic fiber substrate and the sodium silicate.

10. The fire spread prevention material according to Claim 9, wherein:
the outer casing has a water vapor transmission rate (WVTR) at 40°C and 90% RH of 15 g/m²/day or less, and has a thickness of 250 µm or less.

11. The fire spread prevention material according to any one of Claims 1 to 10, wherein:
the fire spread prevention material is used by being disposed between two adjacent battery cells in a battery pack including two or more battery cells.

12. A battery pack comprising:
two or more battery cells; and
the fire spread prevention material according to any one of Claims 1 to 11, disposed between two adjacent battery cells.

13. An automobile comprising:
an automobile body; and
the battery pack according to Claim 12, mounted on the automobile body.
